# EUROPEAN PATENT APPLICATION

(11) **EP 3 446 964 A1**
(43) Date of publication of application: **27.02.2019**
(21) Application number: 17275125.7
(22) Date of filing: 21.08.2017
(51) Int. Cl.: B64C 3/38, B64C 5/10

(54) **CONTROL SURFACE ATTACHMENT**

(71) Applicant: Claverham Limited, Bristol BS49 4NF (GB)
(72) Inventor: BEKIRCAN, Suat, Combe Down, Bath BA2 5DQ (GB)
(74) Representative: Dehns

(57) **Abstract**

An airfoil structure (103) comprising a main body (101) and at least one control surface (102) attached to the main body (101) by a flexible attachment (117), the flexible attachment (117) comprising a flexible first surface (118) and a flexible second surface (120) opposed to the flexible first surface (118), each of the flexible first surface (118) and the flexible second surface (120) having a waveform structure.

## Description

### TECHNICAL FIELD

The present disclosure relates to airfoil control surfaces, and in particular to the mechanism by which control surfaces are attached to airfoils.

### BACKGROUND

Control surfaces are devices employed on airfoils that allow an operator to alter the aerodynamic characteristics of the airfoil. For example, a control surface attached to a wing of a fixed-wing aircraft may be operated, for example rotated, to redirect the stream of air flowing over the surface to adjust the aircraft's pitch, yaw or roll. Examples of such control surfaces are ailerons and trim tabs. Other control surfaces may be translated or moved with a combination of translation and rotation. Such movement may increase the area of the wing. Examples of such control surfaces are flaps. Such control surfaces may also be employed in rotary airfoils, for example rotor blades for rotary wing aircraft.

A control surface is typically attached to the main body of an associated airfoil, or to another control surface, by a hinge or other linkage that forms a discontinuity in the surface of the airfoil structure. This may have an undesirable effect on the flow of air as it passes over the discontinuity, and may even allow foreign materials into the airfoil structure.

### SUMMARY

According to one embodiment of the present disclosure, there is provided an airfoil structure comprising a main body and at least one control surface attached to the main body by a flexible attachment, the flexible attachment comprising a flexible first surface and a flexible second surface opposed to the flexible first surface, each of the flexible first surface and the flexible second surface having a waveform structure.

The flexible first surface may connect a first surface of the main body to a first surface of the at least one control surface, and the flexible second surface may connect a second surface of the main body to a second surface of the at least one control surface.

The flexible attachment may comprise flexible third and fourth surfaces joining the flexible first surface to the flexible second surface, and the flexible third and fourth surfaces may comprise a waveform structure.

The flexible first, second, third and fourth surfaces may completely enclose the flexible attachment, such that there are no gaps or discontinuities between the main body and the at least one control surface.

The airfoil structure may comprise an actuator for moving the at least one control surface.

The actuator may comprise an electro-mechanical actuator.

The actuator may be configured to translate the at least one control surface in a chord-wise direction relative to the main body.

The actuator may be configured to rotate the at least one control surface relative to the main body.

The actuator may comprise a linear actuator arranged chord-wise in the airfoil structure.

In an alternative arrangement, the actuator may comprise a rotary actuator arranged span-wise in the airfoil structure.

A linkage may connect the actuator to the at least one control surface.

In an alternative arrangement, the actuator may be directly attached to the at least one control surface.

The present disclosure also provides an aircraft comprising at least one wing or blade, the at least one wing or blade comprising the airfoil structure of the present disclosure.

The at least one control surface may comprise a flap or trim tab.

The present disclosure also provides a method of actuating a control surface of an airfoil structure, wherein the control surface is attached to a main body of the airfoil structure by a flexible attachment having a waveform structure, the method comprising at least one of translating the control surface in a chord-wise direction relative to a main body of the airfoil structure, and rotating the control surface relative to the main body of the airfoil structure, wherein the translating and/or rotating of the control surface relative to the main body does not form a gap or discontinuity in the airfoil structure.

### BRIEF DESCRIPTION OF THE DRAWINGS

Some exemplary embodiments and features of the present disclosure will now be described by way of example only, and with reference to the following drawings in which:
Figure 1 shows an airfoil having a control surface with a flexible attachment mechanism according to an embodiment;
Figure 2 shows a chord-wise cross-section of the airfoil of Figure 1 through line II-II;
Figure 3 shows a surface of the flexible attachment mechanism of Figure 2;
Figure 4 shows a cross-section of the airfoil of Figure 2 through line B-B;
Figure 5 shows an airfoil having a control surface with a flexible attachment mechanism according to another embodiment.

### DETAILED DESCRIPTION

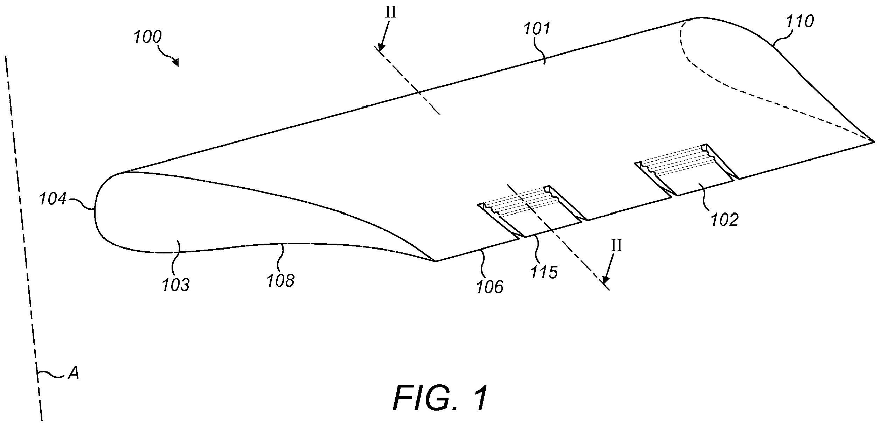

Figure 1 shows a rotor blade 100 of a rotary-wing aircraft configured to rotate around a central axis A. The rotor blade 100 comprises a main body 101 and at least one control surface 102 attached to the main body 101. The main body 101 and the control surface 102 together form an airfoil structure 103 extending from a leading edge 104 to a trailing edge 106 and between a pressure surface 108 and a suction surface 110. While a rotor blade 100 of a rotary-wing aircraft is depicted, the present disclosure may also be applied to other airfoil structures such as, for example, a wing of a fixed-wing aircraft or a blade of a wind turbine.

The control surface 102 may be, for example, a flap or a trim tab. Figure 1 depicts the control surface 102 proximate the trailing edge 106 of the main body 101 to form part of the trailing edge 106 of the airfoil structure 103.

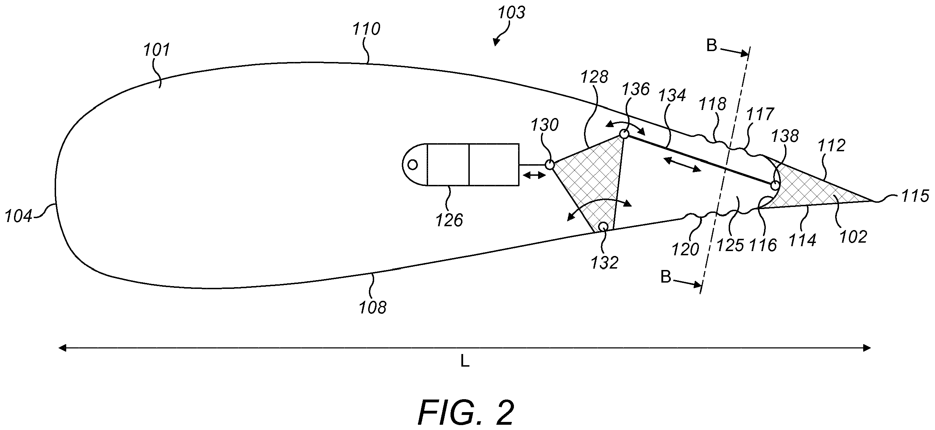

Figure 2 shows a chord-wise cross-section of the airfoil structure 103 along line II-II of Figure 1, through the control surface 102. The control surface 102 comprises a first surface, for example an upper surface 112, and a second surface, for example a lower surface 114, which extend between a trailing edge 115 of the control surface 102 and an interface 116 between the control surface 102 and the main body 101. In this embodiment, the trailing edge 115 of the control surface 102 is co-planar with the trailing edge 106 of the main body 101, but in other embodiments, the trailing edge 115 of the control surface 102 may be offset from the trailing edge 106 of the main body 101, for example in a chord-wise direction.

The control surface 102 is attached to the main body 101 by a flexible attachment 117. The flexible attachment 117 comprises a first flexible surface, for example a flexible upper surface 118, connecting the upper surface 112 of the control surface 102 to the suction surface 110 of the main body 101, and a second flexible surface opposed to the flexible first surface, for example a flexible lower surface 120, connecting the lower surface 114 of the control surface 102 to the pressure surface 108 of the main body 101. The flexible upper and lower surfaces 118, 120 are contiguous with and form part of the continuous external surface of the blade 100. That is, there is no gap between the respective upper and lower surfaces 118, 120 and the suction and pressure surfaces 110, 108 of the main body 101.

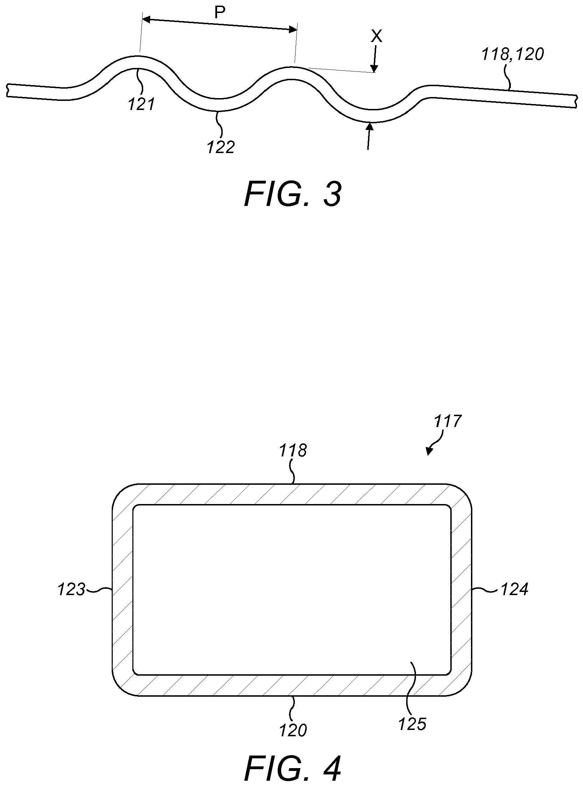

Figure 3 shows a more detailed view of one of the flexible upper and lower surfaces 118, 120. Each of the flexible upper and lower surfaces 118, 120 comprises a flexible waveform having a series of crests 121 and troughs 122. The flexible waveform may be substantially sinusoidal. The difference in amplitude between the highest point of a crest 121 and the lowest point of an adjacent trough 122 (i.e. the peak-to-peak amplitude) may be defined as the height (x) of the waveform, and the distance between two adjacent points of the same phase (i.e. the wavelength) may be defined as the pitch (p) of the waveform. The pitch (p), height (x) and number of crests 121 and troughs 122 may be optimised to minimise their impact on any flow of air over the surface of the airfoil structure 103, while permitting the necessary degree of motion of the control surface 102. Other waveform shapes are contemplated within the scope of the disclosure, such as triangular, square, rectangular, trapezoidal and sawtooth waves.

As shown in Figure 4, the upper and lower surfaces 118, 120 of the control surface 102 are connected by flexible side surfaces 123, 124, which similarly comprise a flexible waveform. The flexible side surfaces 123, 124 are connected at their leading edges to the main body 101 such that an internal cavity 125 of the blade 100 is completely closed from the external atmospheric environment. This may be advantageous as it isolates the internal cavity 125 from contaminants such as sand, dust and water.

The flexible waveform structures may be constructed from any suitable material, for example from a polymeric or metal composite or an alloy material.

The flexible attachment 117 may attached by any suitable method, for example by adhesive bonding or brazing.

In certain embodiments, the waveform structures may be integral extensions of the adjacent surfaces of the main body 101 and/or control surface 102. In other embodiments, they may be separate structures suitably attached to the main body 101 and/or the control surface 102.

Referring back to Figure 2, the position and angle of the control surface 102 relative to the main body 101 may be controlled by an actuation mechanism 126. In this embodiment, the actuation mechanism comprises a linear actuator 126, for example a pneumatic, hydraulic or electromechanical actuator, mounted, for example pivotally mounted, at one end of the main body 101. The actuator 126 is arranged in a generally chord-wise direction. The other end of the actuator 126 is connected to a first link 128 at a first pivot joint 130. The first link 128 is pivotally mounted to the main body 101, for example adjacent the suction surface 110, at a second pivot joint 132. Of course it will be appreciated that the first link 128 may be mounted elsewhere in the main body 101. The first link 128 is attached to a second link 134 at a third pivot joint 136. In this embodiment, the first link 128 is generally triangular and the first, second and third pivot joints 130, 132, 136 are arranged at the respective vertices of the first link 128. Of course other linkage configurations may be used.

The second link 134 is connected to the control surface 102 at a fourth joint 138, for example a ball joint.

The position of the control surface 102 may be adjusted, via the actuator 126, to alter the aerodynamic characteristics of the airfoil structure 103. Specifically, the control surface 102 may be rotated relative to the main body 101 to increase or decrease the curvature of the airfoil structure 103. The control surface 102 may additionally or alternatively be extended away from the main body 101 such that the chord length L (the distance between the leading edge 104 of the main body 101 and the trailing edge 106 of the control surface 102) of the airfoil structure 103 increases, or retracted towards the main body 101 such that the chord length L of the airfoil structure 103 decreases. Movement of the control surface 102 relative to the main body 101 is facilitated by the flexible waveforms of the upper, lower and side surfaces 118, 120, 123, 124. The control surface 102 may be moved relative to the main body 101 without producing any discontinuities in the surface of the airfoil structure 103, and without exposing the internal cavity 125 and any components it houses to the surrounding atmospheric environment.

The nature of the movement of the control surface 102 will depend on the particular configuration of the linkage, for example the relative positions of the first to fourth joints 130, 132, 136, 138.

For example, in the embodiment show in in Figure 2, extension of the actuator 126 away from the leading edge 106 of the main body 101 may cause the pitch (p) of the flexible waveforms of each of the flexible upper, lower and side surfaces 118, 120, 123, 124 to increase, the height (x) of the flexible waveforms of each of the flexible upper, lower and side surfaces 118, 120, 123, 124 to decrease, and the control surface 102 to move away from the leading edge 106 of the main body 101. Similarly, by operating the actuator 126 to retract the control surface 102 towards the main body 101, the pitch (p) of the flexible waveforms of each of the flexible upper, lower and side surfaces 118, 120, 123, 124 may decrease, and the height (x) of the flexible waveforms of each of the flexible upper, lower and side surfaces 118, 120, 123, 124 may increase.

In another example, operating the actuator 126 may serve to rotate the control surface 102 down to lower the trailing edge 115 of the control surface 102 relative to the trailing edge 106 of the main body 101. The pitch (p) of the flexible waveform of the flexible upper surface 118 may then increase whereas the pitch (p) of the flexible waveform of the flexible lower surface 120 may then decrease. Correspondingly, the height (x) of the flexible waveform of the flexible upper surface 118 may decrease and the height (x) of the flexible waveform of the flexible lower surface 120 may increase. In contrast, by operating the actuator 126 to rotate the control surface 102 up to raise the trailing edge 115 of the control surface 102 relative to the trailing edge 106 of the main body 101, the pitch (p) of the flexible waveform of the flexible upper surface 118 may decrease whereas the pitch (p) of the flexible waveform of the flexible lower surface 120 may increase. Correspondingly, the height (x) of the flexible waveform of the flexible upper surface 118 may increase and the height (x) of the flexible waveform of the flexible lower surface 120 may decrease.

The precise movement of the control surface 102 can be tailored by an appropriate linkage. In other embodiments, a linkage may be unnecessary, the desired movement being achieved by direct attachment of an actuator between the main body 101 and control surface 102.

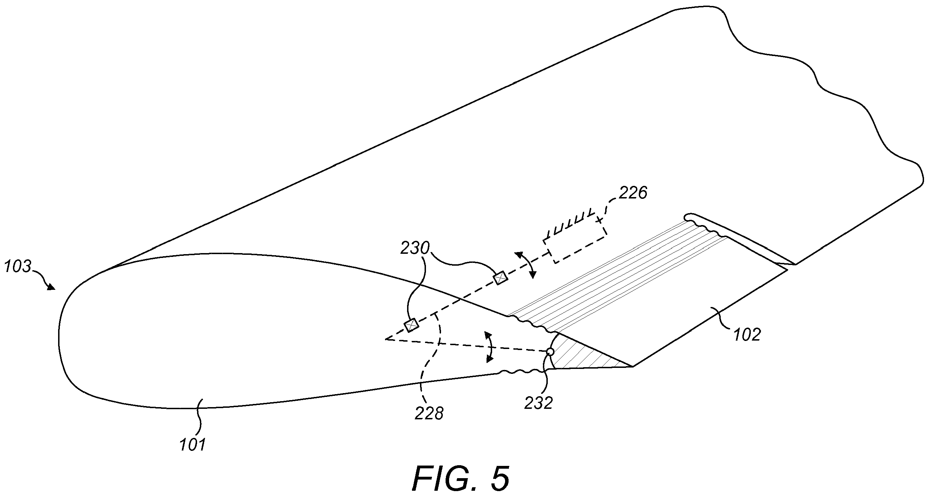

Referring to Figure 5, another form of actuation of the control surface 102 is shown. In this embodiment, rather than a linear actuator 126 as in the first embodiment, the actuator is a rotary actuator 226, for example a rotary electro-mechanical actuator, mounted span-wise in the main body 101 of the airfoil structure 103. An L-shaped drive shaft 228 supported by bearings 230 actuates the control surface 102 through a joint 232, for example a ball joint.

The embodiments described above may provide a number of advantages. The joint airfoil structure 103 is completely enclosed by the flexible upper, lower and side surfaces 118, 120, 123, 124 such that the control surface 102 may be rotated up or down, and/or extended or retracted whilst the internal cavity 125 of the blade 100 remains entirely sealed from the outside environment. This prevents foreign debris from entering the blade 100. Furthermore, the removal of any gaps between the main body 101 and the control surface 102 may improve the flow of air passing over the surface of the blade 100. Moreover, the pitch (p), height (x) and number of crests 121 and troughs 122 of the flexible waveforms can be optimised to further reduce the effect of the flexible attachment 117 on the flow of air passing over the blade surface whilst maximising flexibility of the attachment 117. If used for a gurney flap arrangement, the flexible attachment 117 could also be positioned nearer the trailing edge 106, thereby increasing lift in comparison to conventional gurney flap arrangements.

While described in the context of a rotor blade in the embodiments above, the disclosure is not limited to such blades. The disclosure also extends to fixed-wing structures such as aircraft wings, elevators, vertical tail planes, wing tips and so on. Also, the rotor blade may be one used for lifting or propulsive purposes, for example in a rotary-wing aircraft or in other applications, for example wind turbines.

Although the figures and the accompanying description describe particular embodiments and examples, it is to be understood that the scope of this disclosure is not to be limited to such specific embodiments, and is, instead, to be determined by the following claims.

## Claims

1. An airfoil structure (103) comprising:
a main body (101); and
at least one control surface (102) attached to the main body (101) by a flexible attachment (117), the flexible attachment (117) comprising a flexible first surface (118) and a flexible second surface (120) opposed to the flexible first surface (118), each of the flexible first surface (118) and the flexible second surface (120) having a waveform structure.

2. The airfoil structure (103) of claim 1, wherein the flexible first surface (118) connects a first surface (110) of the main body (101) to a first surface (112) of the at least one control surface (102), and the flexible second surface (120) connects a second surface (108) of the main body (101) to a second surface (114) of the at least one control surface (102).

3. The airfoil structure (103) of claim 1 or 2, wherein the flexible attachment (117) further comprises flexible third and fourth surfaces (123, 124) joining the flexible first surface (118) to the flexible second surface (120), the flexible third and fourth surfaces (123, 124) comprising a waveform structure.

4. The airfoil structure (103) of claim 3, wherein the flexible first, second, third and fourth surfaces (118, 120, 121, 122) completely enclose the flexible attachment (117), such that there are no gaps or discontinuities between the main body (101) and the at least one control surface (102).

5. The airfoil structure (103) of any preceding claim, further comprising an actuator (126, 226) for moving the at least one control surface (102).

6. The airfoil structure (103) of claim 5, wherein the actuator (126, 226) comprises an electro-mechanical actuator (126, 226).

7. The airfoil structure (103) of claim 5 or 6, wherein the actuator (126, 226) is configured to translate the at least one control surface (102) in a chord-wise direction relative to the main body (101).

8. The airfoil structure (103) of any of claims 5 to 7, wherein the actuator (126, 226) is configured to rotate the at least one control surface (102) relative to the main body (101).

9. The airfoil structure (103) of any of claims 5 to 8, wherein the actuator (126) comprises a linear actuator (126) arranged chord-wise in the airfoil structure (103).

10. The airfoil structure (103) of any of claims 5 to 8, wherein the actuator (226) comprises a rotary actuator (226) arranged span-wise in the airfoil structure (103).

11. The airfoil structure (103) of any of claims 5 to 10, further comprising a linkage (128, 134) connecting the actuator (126; 226) to the at least one control surface (102).

12. The airfoil structure (103) of any of claims 5 to 10, wherein the actuator (126; 226) is directly attached to the at least one control surface (102).

13. An aircraft comprising at least one wing or blade (100), the at least one wing or blade (100) comprising the airfoil structure (103) of any preceding claim.

14. The aircraft of claim 13, wherein the at least one control surface (102) comprises a flap or trim tab.

15. A method of actuating a control surface (102) of an airfoil structure (103), wherein the control surface (102) is attached to a main body (101) of the airfoil structure (103) by a flexible attachment (117) having a waveform structure, the method comprising at least one of translating the control surface (102) in a chord-wise direction relative to a main body (101) of the airfoil structure (103), and rotating the control surface (102) relative to the main body (101) of the airfoil structure (103), wherein the translating and/or rotating of the control surface (102) relative to the main body (101) does not form a gap or discontinuity in the airfoil structure (103).
